(19) Europäisches Patentamt

European Patent Office

Office européen des brevets

(11) **EP 2 275 482 B1**

(12) **EUROPEAN PATENT SPECIFICATION**

(45) Date of publication and mention
of the grant of the patent:
**19.10.2011 Bulletin 2011/42**

(51) Int Cl.:
***C08L 23/00*** *(2006.01)*

(21) Application number: **10166274.0**

(22) Date of filing: **17.06.2010**

(54) **Process for preparing bitumen modifiers via catalytic thermo-mechanical oxidation, and the use of products**

Verfahren zur Herstellung von Bitumen-Modifizierern über die katalytische thermomechanische Oxidation und die Verwendung von Produkten

Procédé de préparation de modificateurs du bitume par oxydation thermomécanique catalytique et utilisation de produits

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR** | • **Eizinger, Horst**<br>**9500, Villach (AT)**<br>• **Saleh, Thaier Hanna**<br>**2040, Budaörs (HU)** |
| (30) Priority: **19.06.2009 HU 0900375** | (74) Representative: **von Füner, Nicolai et al**<br>**Von Füner Ebbinghaus Finck Hano**<br>**Patentanwälte**<br>**Mariahilfplatz 3**<br>**81541 München (DE)** |
| (43) Date of publication of application:<br>**19.01.2011 Bulletin 2011/03** | |
| (73) Proprietor: **Villas Austria Gmbh**<br>**9586 Fürnitz (AT)** | (56) References cited:<br>**GB-A- 2 212 809     US-A- 3 634 293** |
| (72) Inventors:<br>• **Székely, Tamás**<br>**1026, Budapest (HU)** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

The invention relates to the preparation of bitumen modifiers from different mixes of plastic materials, via catalytic thermo-mechanical oxidation, as well as to the use of the resulting product in the manufacture of bitumen mass. This mass can be used in the manufacture of bituminous waterproofing membranes.

It is commonly known that some of the basic physical properties of the so-called straight types of bitumen produced by distillation in the process of refining crude oil are not compatible with requirements imposed by industrial practice. In the first place this relates to the softening point (as determined by the ring and ball method) and to the temperature at which a cooled-down bituminous sheet-shaped product produces a crack upon bending which becomes visible to the unaided eye (flexibility at low temperature, pliability). The interval between the two temperatures is known as the "plasticity range". In order to improve the bitumen's quality features one needs to expand the plasticity range, and also to meet the specific requirements of different application tasks - to move it along the temperature axis upwards (to improve resistance to higher temperatures) or downwards (to improve low temperature and frost toleration). Prior art practice concentrates on blending synthetic polymers with bitumen to improve the temperature and/or the plasticity range, which method is known as "bitumen modification by polymers". The object of this invention is to improve the method of such bitumen modification, specifically for the purpose of application in the manufacturing waterproofing membranes and other sheet-shaped bituminous products.

It is known that a given polymer may only be used for the purpose of bitumen modification if it forms a mixture with the bitumen actually used which is suitable for long-term storage. For testing this property several different methods are known.

From the viewpoint of our research and of the intended purpose it seems most practical to apply fluorescence microscopy analysis to determine the so-called "phase inversion concentration". In the first place we shall start out from fact that the bitumen in itself is a colloidal system in which the oil-based dispersion medium (known as maltene) contains disperse particles of high molar mass having rather intricately branching structures (known as asphaltene). Upon admixing polymers as modifiers the stability of this system may only be maintained if the modifier does not behave as an additional new disperse ingredient (i.e. as if it would be an asphaltene), but instead absorbs (by increasing its own volume) the maltene and thus assumes the maltene's colloidal function and in fact acts as a new dispersion medium. This phenomenon is generally known as "phase inversion". In case of a bitumen in which for the expansion of its volume the introduced polymer does not have sufficient amounts of oil in reserve, we need to add extra amounts of oil, in addition to the admixed polymer. For observing this process we find that fluorescence microscopy is very practical as none of the bitumen's components exhibits fluorescence; thus upon introducing the polymer into the bitumen we can easily observe how the glossy isolated particles (droplets) start to appear on the black background, and how later at a certain level of concentration these patterns undergo reversal change and black droplets become visible against a continuous glossy background. This signals the presence of a stabilized system and the resulting level of concentration indicates the minimum amount needed to obtain a stabilized modified bitumen.

The cost of polymers is determined by the intricacy of manufacturing and by the volume of products marketed. Accordingly the most widely used simple homopolymers like polyethylene, polypropylene, polystyrene, PVC are the cheapest. However, these types of material have a high molar mass and also a considerable proportion of crystals which renders them incompatible with the bitumen.

Therefore, in actual practice one can solve the question of bitumen modification only by using special types of polymers synthetized for this particular purpose, i.e. which are amorphous or have only a low crystallinity index. Among these the styrene-butadiene-styrene copolymer (SBS) and its several variations are in widest use. However, two factors are restricting their wider use. One is their high price, caused by monomer prices and also by the high costs involved in the polymerization technique applied. Another drawback restricting a wider use of SBS-type polymers is the fact that a softening point above 120 °C cannot be achieved, which means that under the continental climatic conditions their use during the summer season is rather constrained. There is a need in the bitumen industry to provide a particular modifier that for the final product ensures good properties in cold/frosty environments and that at the same time raises the product's heat resistance by at least 10 to 15°C, and is available at relatively low prices.

US Patent No. 6372807 discloses a process for manufacturing a bitumen modifier using as raw material certain types of polymers, specifically polyethylene and polypropylene. In essence, the method involves the processing of a mixture of at least two types of homopolymer or of their waste/refuse and some purposefully selected additives by exposing these source/raw materials to a thermal degradation forcedly aided by mechano-chemical action to obtain a bitumen modifier. This process suffers from a drawback as the resulting product appeared to be too sensitive against bitumen quality, and thus its use was only possible within certain limitations.

The object of this invention relates to developing a manufacturing process for a bitumen modifier suitable for improving the bitumen's behavior/properties under both cold and hot conditions, by using polyethylenes and polypropylenes or the mixture of their copolymers or their waste as raw material. An obvious requirement, as in the case of any modifier, must be satisfied: the product must be well soluble in bitumen and must produce said "phase inversion" even if the admixed amount is relatively small. It must raise the original softening point temperature of bitumen and must lower the cold temperature at which the sheet-shaped product manufactured with this particular type of bitumen suffers a crack upon bending (pliability).

A further object of the invention is to use as the modifier's raw material the ethylene propylene diene terpolymers (EPDM) - which are widely used in the rubber industry - with the purpose of obtaining a modifier suitable for manufacturing waterproofing membranes with an extraordinary high flexibility and/or resistance against cold temperatures.

The process according to the invention starting from polyolefins to obtain bitumen modifiers based on raw material mixtures of plastic materials and using a mixing apparatus operating with intense shear action, is characterized by adding to a solid-state mixture of crushed polyethylene material having melt flow rates (MFR) between 0.2 and 20 and of crushed isopolypropylene having melt flow rates (MFR) in the range of 0.5 to 30 mixed at weight ratios of a 1:9 to 9:1, an aluminium silicate in the form of a ground mineral containing smectite and/or zeolite in a proportion of 1 to 30 % by weight of the above mixtures then subjecting the mixture to a mechano-chemical treatment at temperatures between 150 and 250 °C in an apparatus working at shear rates ranging between 200 sec$^{-1}$ and 2000 sec$^{-1}$ and at shear stresses ranging from 0.1 to 1.0 MPa, keeping in said apparatus at the given temperature the plastic mixture at a viscosity in a range between 150 Pa.s and 1000 Pa.s - and contacting the mixture with air. In the oxidation step the ratio of polymer crystals originally present are reduced to 65 to 20 % of the theoretical value and the carbonyl-index indicating the level of oxidation in the mixture of plastic materials assumes values ranging between 0.15 and 0.75. The resulting product shall be cut to practical sizes or granulated, etc., to provide a form for easy use.

The polyethylene used in the process may be low, high, or medium density type (LDPE, HDPE, or MDPE) and/or of the linear low density polyethylene type (LLDPE), or waste or refuse material containing such polyethylene.

The polypropylene used in the process may be the isotactic polypropylene (IPP) or any of its copolymers formed with another alpha-olefin of general formula $C_nH_{2n}$ or a waste/refuse material containing such polymer. Both in commercial practice and in the industrial applications of plastic materials the copolymers are also considered as "polypropylene" for the production of which not only pure polypropylene and small quantities of chain terminators had been used but also extra added ethylene or an alpha-olefin described by the general formula of $C_nH_{2n}$.

If needed, the viscosity of the plastic material mixture subjected to shearing action and its modifying properties may also be regulated by feeding into the apparatus -as an additive - an oil having a flash point above 200 °C at a rate of maximum 30 % by weight of the plastic material mixture. Said oil may be a hydrocarbon distillate, a synthetic lubricating oil/heat transmission oil, or a blend of these, and also waste/spent oil containing products of said quality features.

As mentioned above, in certain cases the viscosity of the plastic material mixture subjected to shearing action needs to be significantly increased which may be achieved by adding filler materials. Suitable fillers are ground limestone or dolomite, quartz powder, ground natural silicate, flue ash, with a particle sizes preferably under 200 microns.

The apparatus performing the high shear operation may be of the internal mixing type, the continuous mixing type or of the single or double screw extruder type. The polyethylene component in the starting solid polymer mixture may be substituted partly or fully by the ethylene-propylene-diene (EPDM) copolymer which material has a Mooney-viscosity ranging between 10 and 90, wherein the diene function is fulfilled by ethylidene-norbomene (ENB) or dicyclopentadienyl (DCPD), preferably by the former, and where the diene content must be minimum 4 %, preferably 8 to 10 %, and the ethylene contents shall be at least 40 %.

More than one, preferably two or three types of bitumen modifiers prepared in accordance with the invention shall be simultaneously or consecutively dissolved in distilled and/or oxidized bitumen to obtain a bituminous mass which is used in well-known techniques for the production of waterproofing membranes or other bituminous sheet-shaped products.

Adjusting of the viscosity of the processed mixture is of paramount importance.

For ideal fluids the Newtonian formula of

$$\eta = \tau/\gamma$$

generally applies, where $\eta$ stands for viscosity, $\tau$ for shear stress, $\gamma$ for shear velocity. However, one must remember that a melted plastic material does not behave as a Newtonian fluid which means that its viscosity is not independent from shear stress or shear rate. If we, however, wish to use this relationship as an approximation, then it shall be valid only for a given temperature and a given shear stress, and then this shall suffice as an orientation value. In such non-Newtonian cases the quantities appearing in the equation are - by convention - marked as "actual". Now, if we use the equation under such constraints, and the values appearing on its right-hand side shall be kept within the limitations specified above (in order to perform the mechano-chemical processing), then we must maintain the actual viscosity at a value suitable for the given process conditions. Logically, also the average treatment temperature must be maintained, which is at about 150 °C. The combination of said process parameter limitations and of the above relationship results in viscosity values ranging between 300 and 1500 Pa.s, optimally between 500 and 900 Pa.s.

If the melt of the selected raw materials at a temperature of 150 °C and at the given shear stress has a lower viscosity than the bottom threshold value specified above, then the viscosity may and should be increased by adding suitable fillers. Such fillers may have particle sizes of maximum 200 microns and may be limestone powder, talcum, powder of dolomite or silicate, while selecting among these substances is not considered critical.

The viscosity of the melt provides only a theorethical possibility for performing the necessary shearing process. Obviously, the fulfillment of the invention-relevant shearing requirements depends also on the peculiarities of apparatus/ equipment design and its mode of operation. This is being fulfilled if in the case of internal mixers the apparatus' voluminal capacity is filled to at least 70 to 90 % and the rotor's rotational speed is adjusted to at least 60 rpm, preferably to 100 rpm. In internal mixers the material is processed in separate batches, the cycle time may be adjusted if necessary to help in achieving the optimum conditions for shearing or in adequately completing the reaction process. In the case of extruders one may adjust the blocking tool at the apparatus' end to increase/decrease retroactive pressure (the "die pressure") to ensure practically the required rheological conditions under the given screw design and screw speed settings.

Although even in extruders the conditions of shearing are not the same at each point from the viewpoint of mechano-chemical processing, we may apply the following equation that describes the average shear to which molecules in the fluidic mass are subjected:

$$\tau = r/2\Delta p$$

where $\tau$ stands for the shear stress to which molecules are subjected, r for the shear zone radius within the extruder, $\Delta p$ for the pressure-gradient developing in the reaction zone. Thus we are in a position - by adjusting the blocking tool at the discharge end - to adjust the value of $\Delta p$, and by doing so to determine the value of $\tau$, which is of critical importance for the mechano-chemical treatment.

One of the objects of thermo-mechano-chemical treatment is to reduce the crystallinity of raw materials. We observed that polyolefin-based products are capable of meeting the requirements of good solubility in bitumen, i.e. those of successful modification, if their specific melting heat calculated for 1 gramm as measured by differential scanning calorimetry, DSC, (a technique well-known in the plastic material industry) amounts to maximum 80%, preferably to maximum 50 to 60% and minimum 15% of the theoretical (100% crystalline) melting heat. The melting heat ratios are known in prior art as the crystalline ratio. The following reference deals with the melting heat values measured or calculated for the "entirely" crystallized state of several widely used plastic materials:

ASTM D3418: Standard Test Method for Enthalpies of Fusion and Crystallization of Polymers by Differential Scanning Calorimetry.

Another important feature of the process according to this invention is that - as it was recognized - if the molten mass in the apparatus was subjected to contact with the air introduced into the apparatus, then the mechano-chemical processes were augmented also by oxidative processes. This so-called regulated aeration has been performed by introducing a constant flow of air into the apparatus or by occasionally opening the feeding port of the apparatus. According to the invention oxidation shall be kept up preferably as long as the value of the carbonyl index (that represents the level of oxidation in the plastic material mix) enters the range of 0.15 to 0.75. The carbonyl index is a ratio measured by the method Fourier Transformation Infrared Spectroscopy (FTIR) which relates to the absorption measured at 1710 to 1720 cm$^{-1}$ wave number. This method proved very useful in the instant case, as each of the many oxidation products of the hydrocarbons contains a carbonyl group.

The above oxidative thermo-mechanical processes may be significantly accelerated by adding natural or synthetic aluminum-silicates as catalysts. Two groups of aluminum-silicates are particularly efficient: the clay minerals, specifically their smectite-contents, and the zeolitic minterals which have a peculiar crystalline structure. The aluminum silicates shall be admixed preferably in the form of particles not larger than $300\mu$. Both rock types should have an active mineral content (in form of smectite or zeolite) not less than 30 % by weight.

The modifier prepared in accordance with the invention may be used for achieving in the admixed bitumen an extremely low (-20°C or lower) pliability and/or particularly high elasticity and shear resistance, without lowering the softening point. In addition to the raw materials such as PE and PP the technology provided by the invention may be also used to incorporate ethylene propylene diene terpolymers (EPDM) into the molecular structure. Technically this feature also has its merits as EPDM and bitumen are otherwise incompatible, i.e. EPDM cannot be used directly as a modifier. It has been found that the favorable effects of EPDM incorporated into the bitumen modifier prepared according to the invention shall be observable in the bitumen even if only small amounts of EPDM are applied. In relation to the entire mass of polymers the ratio of EPDM should be between 3 to 50 %, preferably 5 to 15 % by weight. If a modifier containing the above ratio of EPDM is being dissolved in bitumen and it is added in ratios between 15 to 18 % by weight, then the final concentration of EPDM in the bitumen is at very low level where one cannot expect much as a modifying effect. It has been found that the EPDM incorporated into the modifier has a significant influence on the bitumen.

For a practical implementation of the process according to the invention in the first step a composition formula of the modifier (the plastic mix) is calculated.

Orientation is provided by Tables 1 and 2 of Example 1. If the modifier shall not be prepared from waste material, then the necessary raw materials shall be purchased from the market. If partially or entirely waste or refuse (used) material is intended to produce the modifier, then a representative sample must be taken from the mass of randomly mixed material; the sample shall then be sorted into fractions where the total quantity of such fractions shall amount to some 85 to 90 % by weight of the sample originally taken. The individual and separate fractions shall be identified first by testing the FTIR quality, followed by individually determining the MFR (melt flow rate) values of the fractions.Considering the technical specifications of the processing apparatus and the components of the starting mix the necessary technological operations can be determined as illustrated in the following examples. The scope of the invention is not limited to the Examples.

Example 1

Preparing a modifier for the manufacture standard waterproofing membranes

The raw plastic mix comprises low density polyethylene (LDPE) and isotactic polypropylene (IPP). Such starting materials may be in form of packaging foils or films. Tables 1 and 2 list the material ingredients in detail:

Table 1

Composition of the polyethylene material mix

| PT | PU | MFR | Conc.% |
|---|---|---|---|
| LDPE | (TVK FC 243-51) blown film | 2 | 70 |
| LDPE | (TVK FD 243-51) blown film | 4 | 20 |
| LDPE | (TVK FB 243-55) blown film | 0.75 | 10 |
| Abbreviations: | | | |
| PT = polymer type | | | |
| PU = primary application | | | |
| MFR = MAR value ISO 1133 | | | |
| Conc.% = concentration in mixture % | | | |

Table 2

Composition of the polypropylene material mix

| PT | PU | MFR | Conc.% |
|---|---|---|---|
| IPP homopolymer (TVK, H-23 8 F) | blown film | 9 | 60 |
| IPP homopolymer (TVK, H-649 FH) | extruded film | 2.5 | 30 |
| IPP homopolymer (TVK, H-145 F) | extruded fibre | 25 | 10 |

The plastic mixture was prepared in a vertically arranged conical homogenizer-chopper equipped with a spiral mixer, at ambient temperatures and by using the above starting materials; the foil material is fed into the homogenizer after agglomeration, while all other raw materials were coarsely pre-crushed (maximum particle size: 5 mm) before admixing.

216 kg of LDPE mix ( Table 1) and 60 kg of the IPP mix (Table 2) were added as starting mix. As catalyst 9 kg of basalt-bentonite powder (particle size less than $150\mu$) was added which contained 38 % by weight of montmorillonite. As filler 15 kg of limestone powder was added. This mixture has been processed in the homogenizer until homogenization was achieved.

5 6 kg of the homogenized mixture have been fed - within a period of 2 minutes - into an F50 Banbury-type internal mixer (manufacturer: Farrel).

This production apparatus had been used for the experiments described in Examples 1 through 6. Considering that the rheological conditions in these types of equipment greatly differ at specific points within the equipment, so the rheological data were taken from specifications describing the design and structural features of such equipment, and also from model experiments. In the case of these examples the resulting average shear stress ranges between 0.4 and 0.6 MPa. The result of implementing the invention is demonstrated in the tables.

The apparatus' mantle temperature at the beginning of the process was at 110 °C, and the mixing propellers were subjected to water cooling during the entire process of production. For processing the propeller speed was set at 100 rpm. Already during admixing the components rise in power (i.e. a increase in the electric current uptake), was observed compared to the electric intensity measured at the starting phase. The electric current intensity requirement reached a peak of 550 A at the melting of raw material and the reaction progressed, which was followed by a decline in intensity and the stationary value was reached at 260 A. After further 2 minutes processing the equipment's feeding door was opened for 10 seconds which permitted the entry of air into the apparatus. Due to oxidation the temperature of the processed material increased (see Table 3). This resulted a reduction in resistance against shearing which further resulted a drop in the electric current intensity used, while the temperature in the material paste reached 165 °C. At this stage 12 kg of spent oil (preheated to 160 °C) was fed into the mixer. It took another four minutes for the melt to bind the spent oil. The resulting final product was transferred to a Bridge-type extruder and granulated using an underwater cutting head.

During the process the equipment was stopped several times to draw small quantity samples for testing the rate/progress of crystallization and oxidation. The samples were used to prepare modified bitumen which was pressed in a form to obtain 4 mm thick sheet-shaped samples that were kept for 24 hours at room temperature. The technological parameters and the date related to product quality are listed in Table 3.

Table 3

Production properties of the modifier according to Example 1 and its modifying effects:

| T | Ox | t | CU | Cry DSC | COI | phc | T.P. sp | pli |
|---|---|---|---|---|---|---|---|---|
| 0 | - | 110 | 140 | 87 | 0,11 | | | |
| 2 | - | 105 | 150 | 87 | 0,11 | 22 | 102 | +10 |
| 3 | - | 140 | 550 | 70 | 0,23 | | | |
| 5 | - | 150 | 260 | 65 | 0,32 | 15 | 117 | +3 |
| 7 | + | 165 | 180 | 41 | 0,47 | 12 | 123 | -5 |
| 11 | - | 160 | 170 | 32 | 0,51 | 8 | 127 | -10 |

The time data T = 0 in the first column represents the end of feeding of the material into the internal mixer. Abbreviations used:

T = time, minute
Ox = oxydization
t = temperature °C
CU = current A
Cry = Crystallinity, % (DSC)
COI = carbonyl index (FTIR)
T.P = test plate
phc = phase conversion concentration, %
sp = softening point °C (ring and ball method)
pli = pliability, °C

Using the composition of the starting plastic material mix of Example 1 we repeated the treatment without applying the catalyst and the oxidation process. The results are shown in Table 3a.:

Table 3a.

Production properties of the modifier according to known method and its modifying effects:

| T | t | CU | Cry DSC | phc | T.P. sp | pli |
|---|---|---|---|---|---|---|
| 0 | 110 | 140 | 85 | | | |

(continued)

Production properties of the modifier according to known method and its modifying effects:

| T | t | CU | Cry | | T.P. | |
| | | | DSC | phc | sp | pli |
| --- | --- | --- | --- | --- | --- | --- |
| 2 | 105 | 150 | 85 | | | |
| 3 | 118 | 240 | 80 | 25 | 90 | +10 |
| 5 | 125 | 320 | 75 | 20 | 117 | +10 |
| 7 | 140 | 500 | 71 | 18 | 120 | +10 |
| 11 | 150 | 530 | 62 | 16 | 124 | -1 |
| 14 | 155 | 200 | 55 | 15 | 125 | -5 |
| 20 | 160 | 170 | 42 | 12 | 127 | -8 |
| Abbreviations: as under Table 3 | | | | | | |

As shown in Table 3a we found that in spite of a longer duration of treatment no further reduction in the crystallization rate could be achieved against the 11 minutes value in Table 3, i.e. during the technically feasible time of 10 to 12 minutes the crystallization rate is the double of the rate achieved according to the invention.

This difference is well manifested both in the significantly higher value of phase inversion concentration and in a poorer performance of pliability.

Example 2

Composition of a modifier for the production of heat-resistant waterproofing membranes

The process of Example 1 was repeated with the difference of the starting plastic material: 42 kg of the plastic material according to Table 1 was mixed to 236 kg of Table 2 mix, then the catalyst and additives specified in Example 1 plus 14 kg of devolatilized oil were admixed.. Another difference was that in preparing the plastic material mixture of this Example a final temperature of 210 °C was adjusted. The production parameters and the properties of the resulting product are listed in Table 4.

Table 4

Production properties of the modifier according to the method of Example 1 and its modifying effects

| T | Ox | t | CU | Cry | COI | T.P. | | |
| | | | | DSC | | phc | sp | pli |
| --- | --- | --- | --- | --- | --- | --- | --- | --- |
| 0 | - | 110 | 150 | 91 | 0.13 | | | |
| 2 | - | 100 | 150 | 90 | 0.13 | | | |
| 3 | - | 130 | 280 | 75 | 0.22 | | | |
| 4 | - | 140 | 320 | 54 | 0.33 | 18 | 134 | +12 |
| 6 | + | 180 | 400 | 37 | 0.42 | 15 | 140 | +9 |
| 8 | - | 210 | 200 | 20 | 0.55 | 14 | 154 | +3 |
| Abbreviations: as under Table 3 | | | | | | | | |

Now, if we evaluate the results obtained from the test plates prepared with these two modifiers, we may observe that each of them is suitable for the production of waterproofing membranes. Membranes prepared with the modifier of Example 1 can be used primarily in the winter season and the product of Example 2 may be used during very hot summers and even under tropical conditions.

Example 3

Using modifiers in the production of plastomer membranes and sheet-shaped products

In a vertically arranged heated mixing tank (equipped with a vertical high-power propeller mixer) we added to 4000 kgs of 40/200 grade distilled bitumen (preheated to 180 to 190 °C) a total of 450 kgs of modifier according to Example 1. Mixing shall be kept up until the polymer-granules are fully dissolved. At intervals samples shall be drawn from the processed paste to perform checks under a fluorescence microscope. Bitumen is not exhibiting fluorescence but the modifier's polymer-mixture does. The progress of dissolution and the structure of the emerging system may be observed well. The successful modification's criterion is the occurrence of "phase inversion", i.e. the phenomenon in which the functions of the continuous dispersion medium and of the dispersed fraction are replacing each other. This is manifested by a continuous state of the fluorescing polymer-phase, while the bitumen appears in this medium as a dispersed phase. After the fluorescing particles have disappeared , mixing shall be continued and 300 kgs of modifier of Example 2 shall now be dissolved in the former molten mass, and the process repeated. Each of these two types of dissolution processes takes some 40 to 50 minutes to be completed. The resulting mass shall be mixed with devolatilized waste oil and a waterproofing membrane shall be formed, using limestone or dolomite powder as filler. The weight of the filler material for 5000 kg of molten mass shall be 1250 kg. The bitumen mass so prepared may be used to produce sheet-shaped products, the properties of which are listed in Table 5 of Example 4.

Example 4

Using modifiers in the production of waterproofing membranes with a high softening point

For producing waterproofing membranes with a high softening point and with an excellent toleration of cold temperatures we added to hot bitumen 300 kg of the modifier of Example 1 and 450 kg of Example 2, and the process as described in Example 3 was repeated. The data describing the produced sheet-shaped material are listed in Table 5.

Table 5

Properties of waterproofing membranes produced in accordance with Examples 3 and 4

| M | Visc. | Soft | Penet 25°C | Penet 50 °C | pli |
|---|---|---|---|---|---|
| Example 3 | 16 | 135 | 32 | 67 | -8 |
| Example 4 | 11 | 145 | 22 | 50 | +5 |

Abbreviations:
M = modifier type
Visc. = viscosity at 160°C
Soft = softening point °C
Penet = penetration according to Hungarian Standard MSZ EN 1426
pli = pliability °C

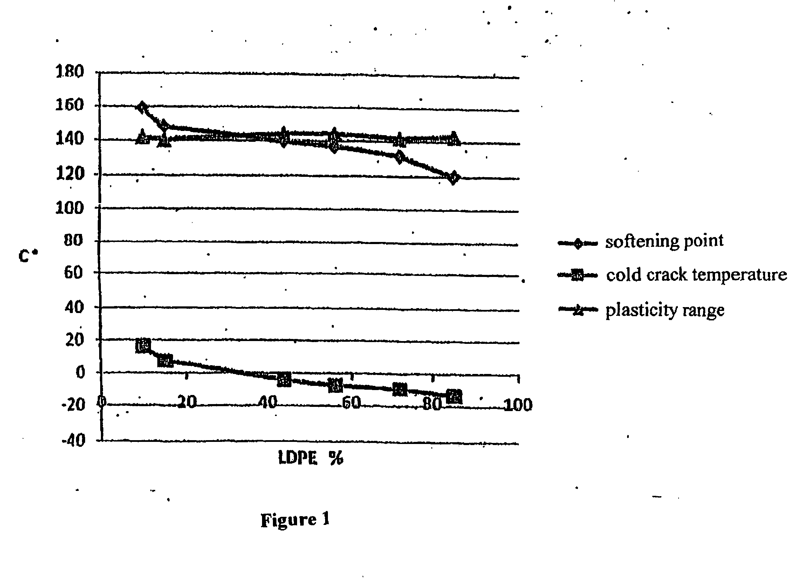

One of the important advantages of these processes are that the effects achieved with a modifier under otherwise identical technological conditions may easily be regulated by changing the ratios of raw materials used in producing the modifier. This relationship is demonstrated by Figure 1 (attached), where the bituminous waterproofing membrane had been treated with LDPE-IPP-based modifiers.

Figure 1 is illustrating the relationship between the two major parameters (softening point and cold crack temperature) in the case of 4 mm thick sheet-shaped samples. By varying the ratios of components, by using plastic waste material, it was possible to meet the quality requirements raised in industrial uses, which results in significant economic advantages.

A modifier prepared from equal or nearly equal parts of LDPE-IPP raw materials is not extensively sensitive against fluctuations within the plasticity range; accordingly if waste plastic materials are used, any departures from suggested ratios shall not have significant effects on the quality of the endproduct.

Example 5

Preparing a modifier using several types of polyethylene for the production of waterproofing membranes

Example 5 describes the composition of a modifier which is suitable for the production of plastomer- and elastomer-modified bituminous membranes/sheets. In the modifier's raw material mix a portion of the LDPE was replaced by HDPE. One use of the HDPE is for containers of lubricating oil which after use are considered as hazardous waste, due to their oil contamination.

In the process of Example 5 said containers may be used without the need for removing said oil contamination, and this waste material may be extruded directly. In preparing the modifier we used as catalyst a zeolite-based mineral, ground to particle sizes specified in Example 1 and containing clinoptilolite at a ratio of 34 %.

The composition of the raw material mix used for the modifier of Example 5 is shown in Table 6.

Table 6

| PT | PU | Feed kg | C° / MFR |
|---|---|---|---|
| LDPE TVK, AC 2014 | hollow shape (blown) | 162 | 190/2 |
| HDPE TVK, BA 550-13 | bottle (blown) | 40 | 190/0,35 |
| HDPE TVK, BS 501-17 | tube (blown) | 18 | 190/0.2 |
| IPP TVK, H-543 F | sheet material (extruded) | 50 | 230/4 |

Abbreviations used:
PT = polymer type
PU = primary application

To the 270 kg of extruded plastic material mix of Table 6 40 kgs meal of zeolite-based minerals was added. The process of treatment differs from that of Example 1 by opening the feeding door three times and by adjusting the final temperature of kneading/mixing between a range of 190 and 195 °C. Table 7 describes the conditions of preparing the modifier and the properties of the bituminous test plate. The test plate has been prepared by using a bitumen containing 15 w% of the modifier.

Table 7

| T | Ox | t | CU | cry DSC | COI | visc | phc | T.P pli | sp |
|---|---|---|---|---|---|---|---|---|---|
| 0 | - | 110 | 150 | 72 | 0.15 | | | | |
| 2 | - | 140 | 180 | 68 | 0.18 | | | 0 | |
| 3 | - | 156 | 210 | 64 | 0.21 | 800 | 23 | -5 | 120 |
| 4 | - | 170 | 400 | 50 | 0.31 | 900 | 20 | -8 | 122 |
| 5 | + | 180 | 470 | 40 | 0.36 | 950 | 15 | -10 | 130 |
| 6 | + | 190 | 430 | 31 | 0.39 | 920 | 11 | -15 | 136 |
| 7 | + | 210 | 350 | 21 | 0.46 | 890 | 8 | -18 | 125 |

Abbreviations:
T = time, minute
Ox = oxidization
t = temperature °C
CU = current, A
cry DSC = crystallinity, % (DSC)
COI = carbonyl index (FTIR)
visc = viscosity in $\eta$ at 150 °C, Pa.s
T.P = test plate
phc = phase conversion concentration, %
pli = pliability %
sp = softening point °C (ring and ball method)

At the indicated minutes of the process, the oxidation step means opening the feeding door of the internal mixer for 10 sec. The viscosity of molten samples drawn during the process has been measured in units of $\eta$.Pa-s at a temperature of 150 °C.

The modifier composed of the indicated raw materials and processed as in Table 7 may be used to produce viscoelastic bituminous waterproofing membranes for which the pliability may be reduced without impairing a good heat behavior (the softening point).

Example 6

Preparing of a modifier for the production of cold-resistant waterproofing membranes

The composition of the raw plastic material mix used for the modifier is shown in Table 8:

Table 8

| PT | PU | Feed kg | C°/MFR |
|---|---|---|---|
| LDPE, TVK FB3-33 | Packaging films | 110 | 190/2.9 |
| LDPE, TVK FD 243-51 | thin films | 40 | 190/4.0 |
| LLDPE, EXXON LL3003 | cast films | 48 | 190/3.2 |
| LLDPE, EXXON LL3001.63 | blown films | 20 | 190/1.0 |
| IPP, TVK H388 F | films | 52 | 230/9.0 |

The LLDPE is used in the stretch film form and was previously agglomerated. The data of modifier composition and the particulars of a modified 40/200 grade distilled bitumen based test plate with the modifier additive are shown in Table 9:

Table 9

| T Ox | t | ECI | cry DSC | COI | visc | phc | T.P. sp | pli | penet |
|---|---|---|---|---|---|---|---|---|---|
| 0 - | 110 | 150 | 78 | 0.10 | | | | | |
| 2 - | 130 | 160 | 75 | 0.12 | | | | | |
| 3 + | 160 | 240 | 50 | 0,25 | 600 | | | | |
| 4 - | 175 | 360 | 40 | 0.36 | 750 | 25 | 110 | -2 | 33 |
| 5 - | 180 | 400 | 32 | 0.40 | 800 | 15 | 123 | -12 | 36 |
| 6 + | 185 | 300 | 30 | 0.44 | 790 | 8 | 125 | -20 | 39 |

Abreviations used:
T = time, minute
Ox = oxidization
ECI = current, A
cry = crystallinity, % (DSC)
COI = carbonyl index (FTIR)
Visc = $\eta$ at 150°C, Pa.s
T.P = properties of modified bitumen
phc = phase conversion concentration, %
sp = softening point, °C (ring and ball method)
pli = pliability °C
penet = penetration °C

Example 7

Production of a modifier and a bituminous paste for the production of bituminous shingles

For preparing the modifier a higher ratio of polypropylene for the raw material mix was used.. For the oxidative catalytic mechano-chemical processing of such material mix an apparatus was used which was capable of operating with a high shear force and thus at a high shear stress. Such apparatus is available as a transverse double screw type extruder with counter-rotating screws and in our experiments the Leistritz LSM 30.34 model was used which had screws with a diameter of 34 mm, arranged at an axle distance of 30 mm. Both the shearing action and the temperature could be regulated adequately. The parameters are listed in Table 11. The composition of the raw material mix used in this process is detailed in Table 10.

Table 10

| PT | PU | C°/MFR | Feed kg | Pr.mat. |
|---|---|---|---|---|
| IPP homopolymer, TVK,H-483F | film fibre | 230/6.5 | 190 | - |
| IPP random copolymer, TVK, K-597 | injection moulding | 230/4 | 20 | - |
| LDPE, TVK, AC-2014 | injection moulding | 190/2 | 20 | - |
| Bentonite | - | - - | 30 | clinoptilolite+ mordenite: 42% |
| Dolomite | - | - - | 20 | particle size under 150μ |

Abbreviations:
PT = polymer type
PU = primary application
Feed, kg = concentraction in mixture, kg
Pr.mat. = properties of material

Table 11 shows the production data of a modifier that may be prepared from the raw material mix of Table 10.

Table 11

| τ | γ | cr | COI | phc | mod.cc |
|---|---|---|---|---|---|
| 0.36 | 300 | 76 | 0.22 | 26 | 29 |
| 0.38 | 400 | 68 | 0.33 | 24 | 31 |
| 0.45 | 500 | 38 | 0.54 | 18 | 38 |

Abbreviations:
$\tau$ = shear stress, MPa
$\gamma$ = shear rate $s^{-1}$
cr = crystallinity, %
COI = carbonyl index
phc = phase inversion concentration, %
mod.cc = modifier concentration at Pa.s viscosity mass

The figures of the last column are of specific importance because if an unlimited amount of the modifier would be dissolved, the membrane manufacturing equipment would be unable to process a bituminous paste. The viscosity limit value is lower than 15 Pa.s. Accordingly, this value is acceptable only if it is not too low, as otherwise the composition formulation of the paste may vary only between rather tight limits.

The above figure of 15 Pa.s is due to the fact that the sheet material also contains in a significant ratio (20 to 35 %) filler material, thus the viscosity of the modified paste without the filler material added must not surpass the critical value limit. As the modification effect is a monotone function of modifier concentration, if this "threshold concentration" has a high value, the bitumen becomes capable of "uptaking" much more modifier than would be necessary for the "phase inversion". For practical reasons the rapid transition has a considerable technological advantage is the production process. Figures in the table clearly indicate that by increasing the shear rate used in the production process the material mix shall more intensely dissolve in bitumen (40/200 grade) and rapid transition concentration shall be reached at lower concentration values. An increasing threshold concentration indicates that in addition to a reduction in crystal formation there is also an advantageous reduction in molar mass. These are the conditions determining the efficiency of any modifier.

The modifier of Example 7 may be used as additive to bituminous products for which good heat tolerance and toughness is a vital requirement. Such products are e.g. the bituminous roofing shingles. Production formulae of roofing shingles and product properties are shown in Table 12. The product itself had been manufactured using the apparatus described in Example 7.

Table 12

| T | Bit | Mod | Oil | Filler | | | Tp |
|---|---|---|---|---|---|---|---|
| | % | % | % | % | Sp | pli | penetr |
| 1 | 40 | 25 | 5 | 30 | 156 | +10 | 18 |
| 2 | 44 | 18 | 8 | 30 | 150 | +5 | 22 |

(continued)

| T | Bit % | Mod % | Oil % | Filler % | Sp | pli | Tp penetr |
|---|---|---|---|---|---|---|---|
| 3 | 47 | 18 | 10 | 25 | 145 | -5 | 27 |

Abbreviations:
T = type No.
Bit = bitumen %
Mod = modifier %
Oil % = oil %
Filler % = filler % by weight
Tp = test plate
sp = softening point °C
pli = pliability, °C
penetr = penetration at 25 °C

Example 8

Composition of a modifier containing EPDM for the production of heat-resistant waterproofing membranes

By using EPDM as an additive one may significantly improve the specific efficacy of a modifier prepared in accordance with the invention. By incorporating EPDM the resulting modified bituminous sheet material becomes extremely cold-resistant and elastic, while its heat toleration and economic criteria remain unimpaired.

The used EPDM contains 35 % b.w. of ethylene, some 5 wt% of norbornene, the rest being polypropylene. The EPDM contains an ethylidene-norbornene functional group (ENB). The EPDM crude rubber as source material (as listed in the table) shall be shredded to sizes of 3 to 10 cm before being admixed to the cold plastic material mix.

For accomplishing the above process the Leistritz LSM extruder already mentioned was used, with a shear stress of 0.52 MPa and a shear rate of 950 sec$^{-1}$. The composition of the raw material mix is shown in Table 13.

Table 13

| PT | PU | C°/MFR | Properties of material | Comp.mix wt % |
|---|---|---|---|---|
| IPP, TVK, H 681 F | blown bottle | 230/2.16 | | 13 |
| LDPE, TVK, AC 2014 | blown bottle | 190/2.16 | | 44 |
| EPDM DSM, 4703 | crude rubber | 65* | | 30 |
| Zeolite mineral | | | particles under 150$\mu$, 40% zeolite content | 4 |
| Dolomite powder | | | particles under 100$\mu$ | 9 |
| * Mooney viscosity value | | | | |

The raw material mix as detailed in Table 13 had been processed using two different apparatus such as internal mixer and an extruder.

Table 14

| App | MFR | cr% | COI | visc. | phc | Tp sp | pli | penet |
|---|---|---|---|---|---|---|---|---|
| int. mixer | 4-5 | 35 | 0.32 | 2100 | 15 | 140 | -20 | 27 |

(continued)

| App | MFR | cr% | COI | visc. | phc | Tp | | |
| | | | | | | sp | pli | penet |
| --- | --- | --- | --- | --- | --- | --- | --- | --- |
| extruder | 5-6 | 21 | 0,40 | 2500 | 9 | 138 | -25 | 33 |
| Abbreviations: | | | | | | | | |
| App = apparatus | | | | | | | | |
| cr% = crystallinity, % | | | | | | | | |
| COI = carbonyl index | | | | | | | | |
| visc = viscosity Pa.s | | | | | | | | |
| phc = phase inversion concentration, % | | | | | | | | |
| Tp = test plate | | | | | | | | |
| sp = softening point °C | | | | | | | | |
| pli = pliability, °C | | | | | | | | |
| penet = penetration at 25°C | | | | | | | | |

For comparison purposes in Table 14 the results obtained with the internal mixer and the extruder specified in Examples 1 through 6 were shown. The figures show that the cold toleration temperature of the sheet-shaped material or of membranes so produced is about the same as in the case of the widely used SBS-type modified sheet material, while its softening point is significantly more favorable.

The advantage should be pointed out that calculated for the bituminous mass an addition of some 4 wt% of elastomer is nearly as advantageous for quality improving purposes as the properties of 10 to 12 % b.w. SBS-type modified mass.

Example 9

Composition and use of modifiers containing IPP-EPDM in a dominant ratio

The binary system of IPP-EPDM possesses favorable mechanical properties, however with known techniques it could not be "dissolved" in bitumen and thus could not be used as a bitumen modifier.

Using the technological process described in Example 8 the binary system with a small ratio of LDPE and with a catalyst containing 6 % montmorillonite (related to the total mass), and finally by admixing 9 % b.w. of devolatilized waste oil, could be processed into an excellent quality bitumen modifier. The entire process has been accomplished under the technical conditions described in Example 8.

Table 15

| PT | PU | C°/MFR | Mv | comp% |
| --- | --- | --- | --- | --- |
| IPP | Fibre | 230/2.1 | | 60 |
| TVK, H 483F | production | | | |
| EPDM | Automotive | | 65 | |
| DSM, 4703 | industry | | | 30 |
| | | | | |
| LDPE, TVK FB3-33 | Packaging foil | 190/2.1 | | 10 |
| Abbreviations: | | | | |
| PT = polymer type | | | | |
| PU = primary application | | | | |
| Mv = Mooney viscosity | | | | |
| comp = composition wt% | | | | |

**Claims**

1.  Process for preparing bitumen modifiers from plastic material mixtures, using polyolefins as starting material, in an apparatus exerting intense shear action at elevated temperatures which comprises mixing in 1:9 to 9:1 weight ratio of crushed solid polyethylene having a melt flow rate (MFR) of 0.2 to 20 and of isopolypropylene having a melt flow rate (MFR) 0.5 to 30 with an aluminum silicate mineral powder containing smectite and/or zeolite in a quantity of 1 to 30 % by weight related to the total mass of said mixture, said material mix is subjected to heat treatment at temperatures between 150 and 250 °C in an apparatus capable of operating at high shear rates and shear stresses and contacting the molten mix inside the apparatus with air, to reduce the crystalline ratio of the raw polymer and finally cutting or granulating the cooled mixture.

2.  Process according to Claim 1 which comprises adjusting in the apparatus shear rates in a range between 200sec$^{-1}$-2000sec$^{-1}$ and shear stresses in a range between 0.1 to 1.0 MPa.

3.  Process according to Claim 1 which comprises keeping the viscosity of the molten plastic mass in a range between 150 to 1000 Pa.s, preferably in a range between 500 to 900 Pa.s.

4.  Process according to Claim 1 which comprises reducing the crystalline ratio of the raw polymer to 65 to 20 % calculated on the theoretical value corresponding to a carbonyl index of the raw polymer between a value 0.15 and 0.75.

5.  Process according to Claim 1 which comprises using of a polyethylene having low, high or medium density (LDPE, HDPE or MDPE), and/or a linear low density polyethylene (LLDPE), or waste/refuse material containing such polyethylene.

6.  Process according to Claim 1 which comprises using a polypropylene in form of an isotactic polypropylene (IPP) or any of its copolymers formed with another alpha-olefin of general formula $C_nH_{2n}$ or a waste/refuse material containing such polypropylene.

7.  Process according to any of Claims 1 to 6 which comprises adjusting the viscosity of the plastic material mix subjected to shear by admixing a distilled hydrocarbon having a flash point temperature higher than 200 °C at a ratio of max. 30 % by weight related to the total mass of the plastic material mix, wherein the distilled hydrocarbon is in form of lubricating oil/heat transmission oil or a blend of these or waste/spent oil containing such products.

8.  Process according to any of Claims 1 to 7 which comprises controlling the viscosity of the plastic material mix subjected to shear is by admixing filler materials in form of limestone or dolomite powder, quartz meal, finely ground natural silicate, or air-suspended dust, preferably in particle size less than 200 micron.

9.  Process according to Claim 1 which comprises using as the apparatus performing the intense shear operation an internal mixer, continuous mixer, or a double screw extruder.

10. Process according to Claim 1 wherein the polyethylene component in the raw polymer material mix is being fully or partially substituted by ethylene propylene diene (EPDM) copolymer, said EPDM having a Mooney viscosity of 10 to 90 and in which the diene component is ethylidene-norbomene (ENB) or dicyclopentadienyl (DCPD), preferably ethylidene-norbornene, wherein the diene component is at least 4 %, preferably 8 to 10 % by weight, and the ethylene component is at least 40 %by weight.

11. The use of the bitumen modifier prepared in accordance with any of Claims 1 to 10 in the manufacture of waterproofing membranes, wherein one or more, preferably two or three types of modifiers are admixed with distilled or oxidized bitumen and performing the mixing in portions and at elevated temperatures.

**Patentansprüche**

1.  Verfahren zur Herstellung von Bitumenmodifikatoren aus Kunststoffgemischen unter Verwendung von Polyolefinen als Ausgangsmaterial in einer Apparatur, die eine starke Scherwirkung bei erhöhten Temperaturen ausübt, welches das Mischen von zerkleinertem festen Polyethylen mit einer Schmelzfließgeschwindigkeit (MFR) von 0,2 - 20 und von Isopolypropylen mit einer Schmelzfließgeschwindigkeit von 0,5 - 30 mit einem Aluminiumsilicatmineralpulver, enthaltend Smektit und/oder Zeolit in einer Menge von 1 - 30 Gew.-%, bezogen auf die Gesamtmasse des Gemisches, bei einem Gewichtsverhältnis von 1 : 9 - 9 : 1, die Wärmebehandlung des Stoffgemisches bei Temperaturen zwischen 150 und 250° C in einer Apparatur, die bei hohen Schergeschwindigkeiten und Scherspannungen zu arbeiten vermag, die Kontaktierung des geschmolzenen Gemisches in der Apparatur mit Luft zur Verminderung des kristallinen Anteils des Ausgangspolymers und schließlich das Schneiden bzw. Granulieren des abgekühlten Gemisches umfasst.

**2.** Verfahren nach Anspruch 1, welches die Einstellung der Schergeschwindigkeit in der Apparatur auf einen Bereich von 200sec$^{-1}$ - 2000sec$^{-1}$ und der Scherspannung auf einen Bereich von 0,1 - 1,0 MPa umfasst.

**3.** Verfahren nach Anspruch 1, welches das Halten der Viskosität der geschmolzenen Kunststoffmasse in einem Bereich von 150 - 1000 Pa.s, vorzugsweise in einem Bereich von 500 - 900 Pa.s umfasst.

**4.** Verfahren nach Anspruch 1, welches die Reduzierung des kristallinen Anteils des Rohpolymers auf 65 - 20 %, bezogen auf den theoretischen Wert entsprechend einem Carbonylindex des Rohpolymers zwischen einem Wert von 0,15 und 0,75, umfasst.

**5.** Verfahren nach Anspruch 1, welches die Verwendung eines Polyethylens von niedriger, hoher oder mittlerer Dichte (LDPE, HDPE oder MDPE) und/oder von Polyethylen niedriger Dichte mit linearer Struktur (LLDPE) und/oder eines ein solches Polyethylen enthaltenden Abfallmaterials umfasst.

**6.** Verfahren nach Anspruch 1, welches die Verwendung eines Polypropylens in Form eines isotaktischen Polypropylens (IPP) oder eines seiner Copolymere, gebildet zusammen mit einem weiteren $\alpha$-Olefin der allgemeinen Formel $C_nH_{2n}$, oder eines ein solches Polypropylen enthaltenden Abfallmaterials umfasst.

**7.** Verfahren nach einem der Ansprüche 1 bis 6, welches die Einstellung der Viskosität des Kunststoffgemisches, das der Scherbeanspruchung durch Mischen eines destillierten Kohlenwasserstoffs mit einem Entzündungspunkt von über 200° C bei einem Anteil von max. 30 Gew.-%, bezogen auf die Gesamtmasse des Kunststoffgemisches, unterworfen wird, wobei der destillierte Kohlenwasserstoff in Form eines Schmieröls oder Wärmeträgeröls oder eines Gemisches derselben oder eines diese Produkte enthaltenden Abfallöls vorliegt, umfasst.

**8.** Verfahren nach einem der Ansprüche 1 bis 7, welches die Steuerung der Viskosität des Kunststoffgemisches, das der Scherbeanspruchung durch Mischen von Füllstoffen in Form von Kalkstein- oder Dolomitpulver, Quarzmehl, fein vermahlenem Natursilikat oder in Luft suspendiertem Staub, vorzugsweise bei einer Teilchengröße von unter 200 $\mu$ unterworfen wird, umfasst.

**9.** Verfahren nach Anspruch 1, welches die Verwendung eines Innenmischers, eines Stetigmischers oder eines Doppelschneckenextruders als Apparatur für die Durchführung der starken Scherbeanspruchung umfasst.

**10.** Verfahren nach Anspruch 1, wobei die Polyethylenkomponente im Rohpolymermaterialgemisch vollständig oder teilweise durch Ethylenpropylendien (EPDM)-Copolymer ersetzt wird, wobei letzteres eine Mooney-Viskosität von 10 - 90 aufweist und die Dienkomponente Ethyliden-Norbornen (ENB) oder Dicyclopentadienyl (DCPD), vorzugsweise Ethyliden-Norbornen ist, wobei die Dienkomponente wenigstens 4, vorzugsweise 8 - 10 Gew.-% und die Ethylenkomponente wenigstens 40 Gew.-% betragen.

**11.** Verwendung des Bitumenmodifikators, hergestellt nach einem der Ansprüche 1 bis 10, zur Herstellung von Imprägnierungsmembranen, wobei ein oder mehrere Typen, vorzugsweise 2 oder 3 Typen von Modifikatoren mit destilliertem oder oxidiertem Bitumen gemischt werden und das Mischen portionsweise und bei erhöhten Temperaturen erfolgt.

**Revendications**

**1.** Procédé pour préparer des agents modificateurs de bitume à partir de mélanges de matières plastiques, en utilisant des polyoléfines comme matière de départ, dans un appareil exerçant une action de cisaillement intense à des températures élevées, qui comprend le mélange dans un rapport pondéral de 1:9 à 9:1 de polyéthylène solide broyé possédant un indice de fluidité à chaud (MFR) de 0,2 à 20 et d'isopolypropylène possédant un indice de fluidité à chaud (MFR) de 0,5 à 30 avec une poudre minérale de silicate d'aluminium contenant de la smectite et/ou de la zéolithe en une quantité de 1 à 30 % en poids par rapport à la masse totale dudit mélange, ledit mélange de matières étant soumis à un traitement thermique à des températures entre 150 et 250 °C dans un appareil capable de travailler à des taux de cisaillement élevés et à des contraintes de cisaillement élevées, et la mise en contact du mélange en fusion à l'intérieur de l'appareil avec de l'air, afin de réduire le taux de cristallinité du polymère brut, et enfin le découpage ou la granulation du mélange refroidi.

**2.** Procédé selon la revendication 1, qui comprend le réglage des taux de cisaillement dans l'appareil dans une plage

entre 200 sec$^{-1}$ et 2000 sec$^{-1}$ et des contraintes de cisaillement dans une plage entre 0,1 et 1,0 MPa.

3.  Procédé selon la revendication 1, qui comprend le maintien de la viscosité de la matière plastique en fusion dans une plage entre 150 et 1000 Pa.s, de préférence dans une plage entre 500 et 900 Pa.s.

4.  Procédé selon la revendication 1, qui comprend la réduction du taux de cristallinité du polymère brut à concurrence de 65 à 20 % calculés sur la valeur théorique correspondant à un indice carbonyle du polymère brut entre une valeur de 0,15 et 0,75.

5.  Procédé selon la revendication 1, qui comprend l'utilisation d'un polyéthylène possédant une faible densité, une densité élevée ou une densité moyenne (LDPE, HDPE ou MDPE) et/ou d'un polyéthylène linéaire basse densité (LLDPE) ou d'une matière de déchet/rebut contenant un tel polyéthylène.

6.  Procédé selon la revendication 1, qui comprend l'utilisation d'un polypropylène sous la forme d'un polypropylène isotactique (IPP) ou de l'un quelconque de ses copolymères que l'on obtient avec une autre alpha-oléfine répondant à la formule générale $C_nH_{2n}$ ou d'une matière de déchet/rebut contenant un tel polypropylène.

7.  Procédé selon l'une quelconque des revendications 1 à 6, qui comprend le réglage de la viscosité du mélange de matières plastiques soumis à un cisaillement par mélange d'un hydrocarbure distillé possédant une température de point d'inflammation supérieure à 200 °C à concurrence d'une valeur maximale de 30 % en poids par rapport à la masse totale du mélange de matières plastiques, l'hydrocarbure distillé se présentant sous la forme d'huile de lubrification/huile de transfert de chaleur ou sous la forme d'un mélange de celles-ci ou sous la forme d'huile usée/de rebut contenant de tels produits.

8.  Procédé selon l'une quelconque des revendications 1 à 7, qui comprend le réglage de la viscosité du mélange de matières plastiques soumis à un cisaillement par mélange de matières de remplissage sous la forme de calcaire ou de poudre de dolomite, de farine de quartz, de silicate naturel finement broyé ou de poussière en suspension dans l'air, de préférence avec une granulométrie inférieure à 200 microns.

9.  Procédé selon la revendication 1, qui comprend l'utilisation, à titre d'appareil mettant en oeuvre l'opération de cisaillement intense, un mélangeur interne, un mélangeur en continu ou une extrudeuse à double vis sans fin.

10. Procédé selon la revendication 1, dans lequel le composant de polyéthylène dans le mélange de matières polymères brutes est substitué en tout ou en partie par un copolymère d'éthylène propylène diène (EPDM), ledit EPDM possédant une viscosité de Mooney de 10 à 90 et dans lequel le composant diénique est l'éthylidène-norbornène (ENB) ou le dicyclopentadiényle (DCPD), de préférence l'éthylidène-norbornène, le composant diénique représentant au moins 4 %, de préférence de 8 à 10 % en poids, et le composant d'éthylène représentant au moins 40 % en poids.

11. Utilisation de l'agent modificateur de bitume préparé conformément à l'une quelconque des revendications 1 à 10, dans la fabrication de membranes imperméables à l'eau, dans laquelle on mélange un type d'agent modificateur ou plus, de préférence deux ou trois types d'agents modificateurs avec du bitume distillé ou oxydé, et on met en oeuvre le mélange par portions et à des températures élevées.

Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6372807 B